# EUROPÄISCHE PATENTANMELDUNG

(11) **EP 3 381 684 A1**
(43) Veröffentlichungstag der Anmeldung: **03.10.2018**
(21) Anmeldenummer: 18161743.2
(22) Anmeldetag: 14.03.2018
(51) Int. Cl.: B32B 27/40, C04B 26/16, E04F 15/20

(54) **ELASTISCH GEBUNDENE PU-SCHÜTTUNG**

(30) Priorität: 27.03.2017 DE 102017106496; 28.03.2017 DE 102017106643; 03.04.2017 DE 102017107121
(71) Anmelder: BSW Berleburger Schaumstoffwerk GmbH, 57319 Bad Berleburg (DE)
(72) Erfinder: GÜCKER, Karl-Heinrich, 57319 Bad Berleburg (DE)
(74) Vertreter: Grosse, Wolf-Dietrich Rüdiger

(57) **Zusammenfassung**

Die Erfindung betrifft Schüttung zur Trittschalldämmung, umfassend ein rieselfähiges, körniges Grundmaterial sowie ein fließfähiges und aushärtbares Bindemittel, zum Einbringen in Zwischenräume von Deckenelementen, vorzugsweise von Deckenelementen aus Holz, dadurch gekennzeichnet, dass die Schüttung einen Gewichtsanteil an Bindemittel von kleiner 4%, vorzugsweise kleiner als 3%, insbesondere bevorzugt von 1,3 bis 2,5%, bezogen auf das Gewicht des eingesetzten Grundmaterials, aufweist und das Bindemittel ein Prepolymer, insbesondere Polyurethan Prepolymer ist.

## Beschreibung

### 1. Gebiet der Erfindung

Die Erfindung betrifft eine Schüttung zur Trittschalldämmung, wie sie üblicherweise im Baubereich zur Erhöhung der Masse eines Deckenelements, insbesondere aus Holz, Verwendung findet, um Zwischenräume auszufüllen und ggf. einen Unterbau für den Estrichbelag zu bilden. Derartige Schüttungen umfassen üblicherweise ein rieselfähiges, körniges Grundmaterial, beispielsweise Styropor, Perlite bis hin zu Kalkstein oder Splitt, und ein fließfähiges und aushärtbares Bindemittel, mit dem das Grundmaterial benetzt und bei der Aushärtung (beim Ausreagieren) gebunden wird.

### 2. Stand der Technik

In der Vergangenheit wurden diverse lose Schüttungen im oben genannten Anwendungsbereich verwendet, um hierdurch die Masse eines Wand- und / oder Deckenelements zu erhöhen und somit die Schwingfähigkeit zu verringern und die Schalldämpfung, sowohl im Bereich der Luftschalldämmung als auch im Bereich der Trittschalldämmung, zu vergrößern.

Durch die poröse Struktur der Schüttung, insbesondere bei Korngrößen von 2 bis 8 mm für das Grundmaterial, wird ein Teil des Luftschalls absorbiert. Der Energieverlust durch innere Reibung bzw. Dämpfung wird in technischen Aufgabestellungen seit langem verwendet, um Energie abzubauen. Diese Energieverluste werden umso größer, wenn sich die einzelnen Körner des Grundmaterials zumindest in einem gewissen Maße gegeneinander bewegen können.

Lose Schüttungen, wie sie früher Verwendung gefunden haben, sind heutzutage aufgrund einer Reihe von Bestimmungen und Normen nicht mehr erlaubt. Um eine ausreichende Bindung der Schüttung zu gewährleisten, werden heutzutage Bindemittel auf Zementbasis oder Epoxidharz-Basis verwendet. Durch diese Bindungen wird vermieden, dass ein Verrutschen der Schüttung stattfindet und sich ggf. Hohlstellen bilden, welche schlussendlich zum Bruch von Estrichen oder anderen Oberbelägen führen können.

Nachteilig hieran ist jedoch, dass die harte oder steife Bindung der einzelnen Körner des Grundmaterials in der Schüttung die innere Dämpfung und das damit verbundene Energieabbauvermögen wesentlich beeinträchtigt.

### 3. Aufgabe der Erfindung

Es war daher eine Aufgabe der Erfindung, eine Schüttung zur Trittschalldämmung zur Verfügung zu stellen, die die oben genannten Nachteile zu überwinden in der Lage ist und darüber hinaus vorzugsweise schnell und einfach und ohne Zugabe weiterer Zusatzstoffe herstellbar und weiterverarbeitbar ist.

Diese Aufgabe wird im erfindungsgemäßen Sinne mit einer Schüttung, umfassend die Merkmale des Anspruchs 1, gelöst. Vorteilhafte Ausgestaltungen der Erfindung sind in den abhängigen Ansprüchen sowie in der Beschreibung niedergelegt.

### 4. Zusammenfassung der Erfindung

Erfindungsgemäß wird eine Schüttung zur Trittschalldämmung bereitgestellt, bei der ein rieselfähiges, körniges Grundmaterial sowie ein fließfähiges und aushärtbares Bindemittel zusammengeführt werden und in Zwischenräume von Deckenelementen, vorzugsweise von Deckenelementen aus Holz, eingebracht werden. Diese Schüttung bindet am eingebrachten Ort ab und härtet aus und ist dadurch gekennzeichnet, dass die Schüttung einen Gewichtsanteil an Bindemittel von < 4 %, vorzugsweise < 3 %, insbesondere bevorzugt von 1,3 bis 2,5 % bezogen auf das Gewicht des eingesetzten Grundmaterials aufweist, und dass das Bindemittel ein Prepolymer, insbesondere Polyurethan Prepolymer ist.

Polyurethan Prepolymer ist ein Gemisch aus einem langkettigen Polyalkohol und einem monomeren / oligomeren Methylendiphenylisocyanat oder einem Toluylendiisocyanat. Derartige Polyurethan Prepolymere können ohne Zusatz von zusätzlich eingebrachtem Wasser allein unter Nutzung der Luftfeuchtigkeit ausreagieren und besitzen dann eine gegenüber herkömmlichen Bindemitteln deutlich erhöhte Elastizität.

Hierdurch wird eine Schüttung zur Verfügung gestellt, die anders als die bisher verwendeten Schüttungen mit starr aushärtendem Bindemittel elastisch gebunden wird. Die wesentliche Erkenntnis der Erfindung ist die, dass die innere Dämpfung einer Schüttung hierdurch größtenteils erhalten, gegebenenfalls auch durch die elastische Verbindung der Körner gegenüber bisher verwendeten Schüttungen dann verbessert wird, wenn ein elastisches Bindemittel verwendet wird, welches vorzugsweise beim Einbau trocken ist, somit zum Abbinden und Aushärten keinen Zusatz von Wasser benötigt.

Aufgrund des Umstands, dass gemäß der Erfindung ein Prepolymer, insbesondere Polyurethan Prepolymer als Bindemittel Verwendung findet, wird im Gegensatz zu anderen im Markt erhältlichen Bindemitteln und anders als bei Systemen wie Zement oder Latex-Bindemitteln kein Wasser zusätzlich in den Baukörper eingetragen, was einerseits die Zeitdauer bis zur Weiterverarbeitbarkeit des Deckenelements deutlich verkürzt und andererseits dann, wenn das Deckenelement aus Holz gefertigt ist, dieses Material im Wesentlichen unbeeinflusst belässt.

Da ein Prepolymer als Bindemittel in der erfindungsgemäßen Schüttung Verwendung findet, kann dieses Prepolymer ausschließlich mit der Feuchtigkeit der Umgebungsluft reagieren und aushärten.

Die Bauzeit kann hierdurch vorzugsweise von wenigen Wochen oder Monaten auf wenige Stunden reduziert werden, da das Holz nicht geschützt werden muss und nachfolgende Gewerke keine langen Wartezeiten einhalten müssen, was schlussendlich zu einer deutlichen Reduzierung der Bauzeit und auch der Baukosten führt.

Bevorzugt wird, wenn das Bindemittel nach dem Ausreagieren einen Elastizitätsmodul bei 20° C von ≤ 12 N/mm², vorzugsweise ≤ 10 N/mm², insbesondere bevorzugt von ≤ 9 N/mm² aufweist, gemessen nach DIN EN ISO 1798 bei einer Materialprobenstärke von 0,4 mm. Hierdurch wird eine Schüttung geschaffen, deren Elastizität gegenüber den bisher eingesetzten Bindemitteln deutlich erhöht ist. Hierdurch wird eine besonders hohe innere Dämpfung und ein besonders hohes Energieabbauvermögen der Schüttung erreicht.

Vorzugsweise entspricht die erfindungsgemäße Schüttung dem AgBB-Schema des Deutschen Instituts für Bautechnik.

Bevorzugt werden mit der erfindungsgemäßen Schüttung, insbesondere bei Verwendung von Polyurethan als Bindemittel, die Erfordernisse der Brandklasse A2 fl (flooring) erfüllt.

Die erfindungsgemäße Schüttung kann allein oder als zusätzliche Trittschalldämmung mit anderen Trittschallmatten zur Reduzierung des Trittschallpegels in Holzdecken aller Art zum Einsatz kommen. Aufgrund der erzielten Messergebnisse kann somit eine abgehängte Unterdecke entfallen, was ebenfalls eine weitere Kostenreduzierung nach sich ziehen kann. Hierdurch entfällt auch die Notwendigkeit, im Renovierungsfall einen Zugang zu unter einem Boden angeordneten Räumen haben zu müssen.

Selbstverständlich können mit der erfindungsgemäßen Schüttung auch Unebenheiten des Unterbodens ausgeglichen werden, wobei Aufbauten von einer Dicke von 2 bis 100 mm möglich erscheinen. Das Einbetten von Rohrleitungen, Kabeln und Schächten ist ebenso problemlos ausführbar. Die für den normalen Wohnungsbau geforderten Druckfestigkeiten von ca. 5 kN/m² sind ebenfalls ohne Weiteres realisierbar.

Für den Fertighausbau kann die erfindungsgemäße Schüttung ebenfalls für eine schnelle Vorfertigung der Deckenelemente in Segmentbauweise eingesetzt werden.

Die mit der erfindungsgemäßen Schüttung erreichbaren Trittschallpegel gemäß der Deutschen Schallschutznorm DIN 4109 von ca. 47 dB und kleiner sind ebenfalls ohne Weiteres erreichbar. Derartige Trittschallpegel sind insbesondere dann erreichbar, wenn unterhalb und/oder oberhalb der Schüttung eine zusätzliche Flächenlage eingebracht wird, vorzugsweise in Form einer Estrichdämmbahn.

Das Grundmaterial kann jedes im Baubereich gängige und für derartige Schüttungen eingesetzte Material sein, sofern es rieselfähig und körnig ist und mit dem Bindemittel benetzbar ist. Bevorzugt wird Grundmaterial aus Primärsplitt, Kies, Sand, Styroporkugeln, Blähton oder weiteren Mineral- oder Kunststoffgemischen, insbesondere geeignete Mischungen aus diesen Grundmaterialien, je nach Einsatzzweck und gewünschter Trittschalldämmung.

Gemäß einer bevorzugten Ausführungsform der Erfindung beträgt die Schüttdichte des Grundmaterials mehr als 1 200 kg/m³, vorzugsweise zwischen 1400 und 1600 kg/m³. Hierdurch wird, insbesondere in einer Kombination mit Split als Grundmaterial mit einer Korngröße von 2 bis 8 mm und vorzugsweise mit geringem Feinanteil die Schwingfähigkeit insbesondere von Deckenelementen durch eine gezielt eingebrachte Massenerhöhung besonders vorteilhaft unterstützt.

Besonders bevorzugt wird, wenn die Abbinde- oder Aushärtzeit des Bindemittels kleiner 24 Stunden, vorzugsweise kleiner 20 Stunden, beträgt. Hierdurch wird eine Schüttung zur Verfügung gestellt, die das Ziel der schnellen und kostengünstigen Bauweise besonders vorteilhaft unterstützt.

## Patentansprüche

1. Schüttung zur Trittschalldämmung, umfassend ein rieselfähiges, körniges Grundmaterial sowie ein fließfähiges und aushärtbares Bindemittel, zum Einbringen in Zwischenräume von Deckenelementen, vorzugsweise von Deckenelementen aus Holz,
**dadurch gekennzeichnet, dass**
die Schüttung einen Gewichtsanteil an Bindemittel von kleiner 4%, vorzugsweise kleiner als 3%, insbesondere bevorzugt von 1,3 bis 2,5%, bezogen auf das Gewicht des eingesetzten Grundmaterials, aufweist und das Bindemittel ein Prepolymer, insbesondere Polyurethan Prepolymer ist.

2. Schüttung nach Anspruch 1, **dadurch gekennzeichnet, dass** das Grundmaterial Splitt mit einer Korngröße von 2 bis 8 mm ist.

3. Schüttung nach einem der vorhergehenden Ansprüche, **dadurch gekennzeichnet, dass** die Schüttdichte des Grundmaterials größer 1200 kg/m³, vorzugsweise zwischen 1400 und 1600 kg/m³, beträgt.

4. Schüttung nach einem der vorhergehenden Ansprüche, **dadurch gekennzeichnet, dass** das Bindemittel nach dem Ausreagieren einen Elastizitätsmodul bei 20°C von ≤ 12 N/mm², vorzugsweise ≤ 10 N/mm², insbesondere bevorzugt von ≤ 9 N/mm², aufweist.

5. Schüttung nach einem der vorhergehenden Ansprüche, **dadurch gekennzeichnet, dass** das Bindemittel ohne Zusatz von Wasser ausreagierbar ist.

6. Schüttung nach einem der vorhergehenden Ansprüche, **dadurch gekennzeichnet, dass** die Ausreagierzeit des Bindemittels kleiner 24 Stunden, vorzugsweise kleiner 20 Stunden, beträgt.

7. Schüttung nach einem der vorhergehenden Ansprüche, **dadurch gekennzeichnet, dass** die Schüttung eine Druckfestigkeit von wenigstens 4 kN/m², vorzugsweise von ca. 5 kN/m², aufweist.

8. Schüttung nach einem der vorhergehenden Ansprüche, **dadurch gekennzeichnet, dass** durch die Schüttung eine Trittschalldämmung von 47 dB und kleiner erreichbar ist, vorzugsweise in Kombination mit einer Zusatzmatte, insbesondere einer Estrichdämmbahn.

9. Schüttung nach einem der vorhergehenden Ansprüche, **dadurch gekennzeichnet, dass** die Schüttung eine Dicke von 2 bis 100 mm aufweist.
